# EUROPEAN PATENT SPECIFICATION

(11) **EP 1 680 792 B1**
(45) Date of publication and mention of the grant of the patent: **16.07.2008**
(21) Application number: 04784809.8
(22) Date of filing: 22.09.2004
(51) Int. Cl.: H01H 33/66

(54) **SHIELDED ENCAPSULATED VACUUM INTERRUPTER**
ABGESCHIRMTER VERKAPSELTER VAKUUM-UNTERBRECHER
INTERRUPTEUR A VIDE ENCAPSULE BLINDE

(30) Priority: 15.10.2003 US 685723
(43) Date of publication of application: 19.07.2006
(73) Proprietor: G & W ELECTRIC COMPANY, Blue Island, Illinois 60406-1864 (US)
(72) Inventor: MARTIN, Donald, R., New Lenox, IL 60451 (US)
(74) Representative: Makovski, Priscilla Mary
(86) International application number: PCT/US2004/031103
(87) International publication number: WO 2005/041228

(56) References cited:
- US-A- 4 002 867
- US-A- 4 618 749
- US-A- 5 808 258

## Description

### CROSS-REFERENCE TO RELATED APPLICATIONS

This application claims priority of U.S. Patent Application No. 10/687,523, filed October 15, 2003.

### FIELD OF THE INVENTION

The present invention pertains to current interrupting devices for power distribution systems. More particularly, the present invention relates to encapsulated vacuum interrupting devices for shielded power distribution systems.

### BACKGROUND OF THE INVENTION

Now more than ever, electric utility power distribution systems are being constructed underground due to public outcry about esthetics of aerial (i.e., above-ground) distribution systems in what is now known as the Not In My Backyard (NIMBY) phenomenon. To appease the NIMBY contingent, power distribution systems formerly constructed of poles, wires, and pole-mounted switches and transformers are being superceded and even replaced by underground systems constructed of conduits or duct-banks, underground vaults, cables, and ground level or sub-ground level switchgear and transformers. Underground systems pose new operational and maintenance challenges by virtue of being largely unseen. In response to these challenges, organizations such as the Institute of Electrical and Electronics Engineers (IEEE) and American National Standards Institute (ANSI) have implemented standards and codes to insure operating personnel safety and proper system performance. However, at times, personnel safety may conflict with system performance. One such standard recommends the grounding (i.e., shielding) of individual underground distribution system components at multiple system points (e.g., cable splices, transformers, switches). By grounding system components (or their enclosures), a system operator seeks to eliminate accessibility to hazardous voltages by operating personnel.

Vacuum interrupting switches are well known for use in power distribution systems for reliable interruption of fault current and load breaking, and have become effective substitutes for air, oil, and SF6 filled switches. When used in underground applications such as vaults or switchgear where there is a high probability of submersion, vacuum interrupting switches are enclosed or encapsulated in electrically insulating material. To ground a submersible vacuum interrupting switch in order to protect personnel from hazardous voltages, the entire switch exterior must be conductive. However, if the switch is grounded, the electric fields inside the device become distorted and reduce the dielectric withstand capability of the open gap during a switch "break" operation. Mitigation of this electric field distortion has so far been elusive to those knowledgeable in the art.

U.S. Patent No. 4,618,749 to Bohme et al. discloses a vacuum switching apparatus inserted into an insulating material such as epoxy resin. The Bohme et al. switch also has a metallic cover which can be grounded for personnel safety. The disclosed switching apparatus is not integrally molded into the insulating material and a space exists between the apparatus and insulating material. Bohme et al. recognize that the space is susceptible to capacitive discharge due to breakdown of the insulating material (e.g., corona effect) especially during times when the switch contacts are open. Control electrodes embedded in the insulating material attempt to minimize corona effect inside the space by placing voltage stress in the insulating material. It is readily apparent to one knowledgeable in the art that the Bohme et al. device will still suffer from insulating material breakdown. Furthermore, as the switching apparatus is inserted in the pre-formed insulating housing, the device is expensive and complicated to manufacture.

Thomas & Betts Elastimold® MVI Molded Vacuum Fault Interrupter attempts to overcome the deficiencies of the aforementioned Bohme et al. patent by directly encapsulating the vacuum switch chamber in a molded insulating housing. The voltage stress is now present in the insulating housing which has a much higher breakdown strength. However, since the MVI device is shielded, the presence of a grounded surface in close proximity to the vacuum chamber causes an electric field distortion inside the device which decreases the withstand capability of the open gap. Thus, the device is prevented from operating to its full potential.

US - A - 4 002 867 shows a vacuum interrupter with a vacuum chamber in a dielectric housing, and a shield surrounding the electrical contacts within the chamber. The surfaces of the chamber may be coated with semiconductor material to obtain a given surface resistance to prevent the potential value of the shield from floating relative to the electrical contacts.

### BRIEF SUMMARY OF THE INVENTION

A first aspect of the invention relates to a vacuum interrupter as defined in claim 1. A second aspect of the invention, as defined in claim 13, relates to a method of mitigating electric field distortion inside a shielded encapsulated vacuum interrupter as claimed in claim 1. Further features of the aspects of the invention appear in the subsidiary claims.

### BREIF DESCRIPTION OF THE DRAWINGS

FIGURE 1 is a cross-section view of an exemplary encapsulated vacuum interrupter without voltage screens.

FIG. 2 is a front elevation view of an exemplary encapsulated vacuum interrupter with voltage screens.

FIG. 3 is a side elevation view of the encapsulated vacuum interrupter of FIG. 2.

FIG. 4 is a side cross-section view of the encapsulated vacuum interrupter of FIG. 2 showing voltage screens and current sensing device.

FIG. 5 is a side cross-section view of the encapsulated vacuum interrupter of FIG. 2 showing the voltage screens and semi-conductive coating to the vacuum chamber.

FIG. 6 is a finite element analysis of the encapsulated vacuum interrupter of FIG. 2 without voltage screens showing voltage stress distribution during a hi-pot test.

FIG. 7 is a finite element analysis of the encapsulated vacuum interrupter of FIG. 2 with voltage screens showing voltage stress distribution during a hi-pot test.

FIG. 8 is a finite element analysis of the encapsulated vacuum interrupter of FIG. 2 with voltage screens showing voltage stress distribution during a reverse hi-pot test.

### DETAILED DESCRIPTION OF THE INVENTION

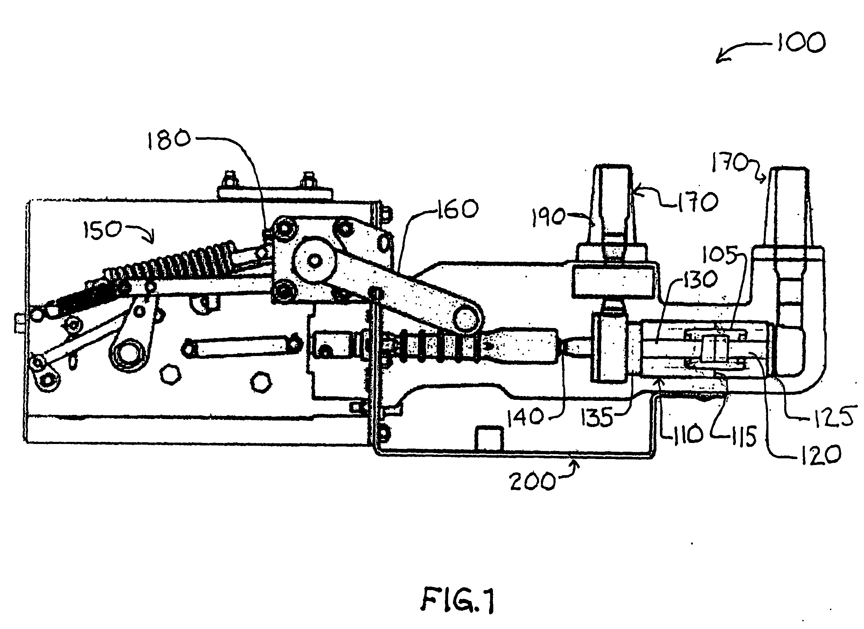

Referring now to the drawings, FIG. 1 shows a cross-sectional view of the internal component arrangement of an exemplary vacuum interrupter 100. Vacuum interrupter 100 may be employed in a power distribution system to open or close an electric circuit. Current flow through the interrupter 100 may be interrupted or restored by vacuum chamber 110. Vacuum chamber 110 includes a generally cylindrical-shaped ceramic housing and two conductive end caps which seal the vacuum chamber and maintain a vacuum therein. Referring to FIG. 1, the vacuum chamber 110 has a "fixed" end and a "movable" end. A fixed contact 120 is disposed within the fixed end of vacuum chamber 110 and is in contact with conductive fixed end cap 125. A movable contact 130 is disposed within the movable end of vacuum chamber 110 and is coaxially aligned with fixed contact 120. Movable contact 130 is in electrical contact with end cap 135 and coaxially engages and disengages from fixed contact 120 to make or break an electric current running therethrough. Conductive movable end cap 135 may be a metallic bellows or the like which permits drive rod 140 to move movable contact 130 back and forth along the vacuum chamber axis while maintaining a sealed vacuum in vacuum chamber 110. Drive rod 140 may be actuated by an operating handle 160 connected to an operating mechanism 150 such as a spring. A contact position indicator 180 may also be included in interrupter 100 so an operator may visually inspect the interrupter to determine whether the contacts are in an open or closed position.

Vacuum chamber 110 also includes an floating shield 105 which is a metallic generally cylindrical-shaped member. Floating shield 105 is supported in vacuum chamber 110 at a fixed coaxial distance from the fixed contact 120 and movable contact 130 by exposed ring 115. The ceramic housing of vacuum chamber 110 includes two generally cylindrical ceramic portions which sandwich exposed ring 115 and retain floating shield 105 at a spaced distance from the contacts. Since floating shield 105 is retained at a spaced distance from the contacts, it is electrically isolated and has a floating voltage potential. During switching operation of the contacts, floating shield 105 prevents metallic ions released from the contacts when arcing occurs from collecting on the interior of the ceramic housing, thereby preventing performance degradation of the interrupter 100.

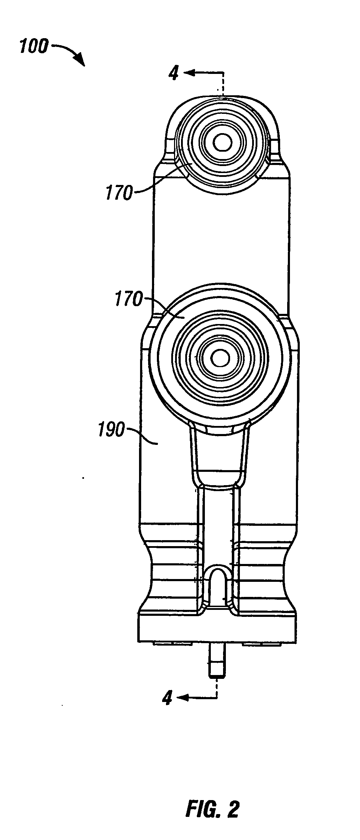

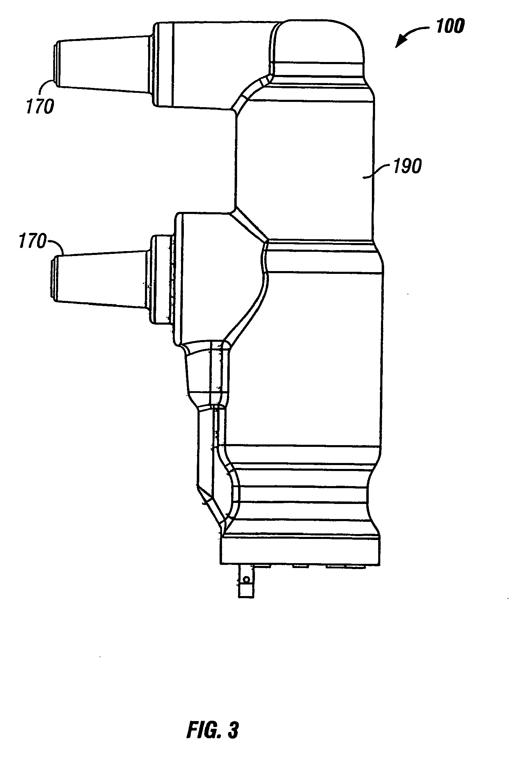

Conductive leads electrically connected to the conductive end caps serve as a connecting means for power distribution conductors such as underground cables to interface with the interrupter 100. To ensure that the vacuum interrupter 100 will operate reliably and safely in wet environments, such as underground vaults or switchgear prone to flooding, the interrupter is encapsulated in a molded dielectric material such as epoxy or the like. As shown in FIG. 1, encapsulation 190 may enclose a portion of the interrupter such as the leads and vacuum chamber 110. However, it is preferable that the vacuum interrupter 100 be completely encapsulated as is shown in FIGS. 2-4. To ensure the safety of operating personnel, the vacuum interrupter is shielded (i.e., grounded) by coating the outer surface of the encapsulation 190 with a semiconductive layer 200 which is at ground potential when installed in a shielded distribution system. One preferred semiconductive layer 200 is Electrodag 213, manufactured by the Acheson Colloids Company of Port Huron, Michigan. Electrodag 213 is a dispersion of finely divided graphite pigment in an epoxy resin solution which has excellent adhesion to epoxy, plastic and ceramics.

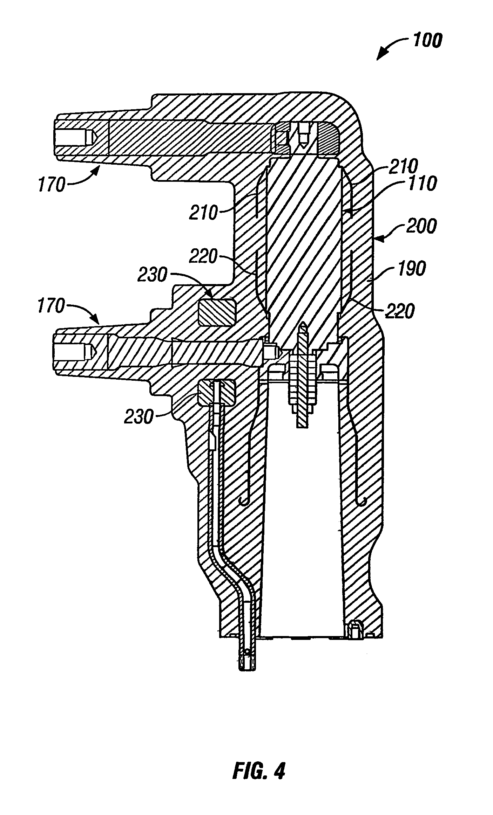

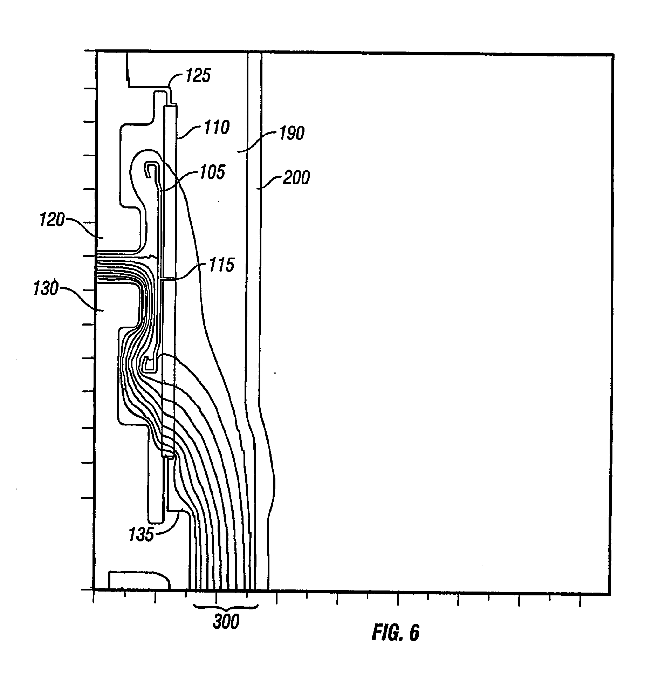

Bushings 170 are formed by encapsulating the conductive leads in the dielectric encapsulation 190. As shown in FIG. 4, a current sensing device 230, such as a current transformer (i.e., CT), may be molded into the dielectric encapsulation to sense fault currents and the like in order to actuate the vacuum interrupter 100. Current sensing device 230 may be in communication with an electronic control system or relay (not shown) which determines if a fault is present in the electric circuit and may operate a motor, solenoid, or the like to actuate operating lever 160 to disengage the movable contact 130 from fixed contact 120, thereby interrupting a current through the vacuum interrupter 100. When the contacts are disengaged from each other, a potential difference exists therebetween in the open gap which, depending on the power distribution system voltage level, can range from 4 kv to 34 kv. Since the semiconductive outer layer 200 of the vacuum interrupter 100 is at ground potential when installed in a shielded distribution system, the grounded surface in close proximity to the vacuum chamber 110 causes a severe electric field distortion inside the vacuum interrupter 100 which significantly reduces the withstand capability of the open gap. Referring to FIG. 6, a finite element analysis of a shielded encapsulated vacuum interrupter is shown. Movable contact 130 is disengaged from fixed contact 120 and an open gap exists therebetween. Electric field lines 300 in the vacuum interrupter 100 show a distorted distribution as they tend toward ground potential.

To counteract the electrical field distortion, voltage screens are attached to the vacuum chamber 110 and are embedded in the dielectric encapsulation 190 to place the voltage stress in the encapsulation. Fixed voltage screen 210 (FIG. 4) is electrically connected to the conductive end cap 125 while movable voltage screen 220 is affixed to the conductive movable end cap 13 5. On one exemplary embodiment, the voltage screens are preferably conductive bowl-shaped elements which are perforated metallic sheets or metallic mesh screens to facilitate bonding to the dielectric encapsulation.

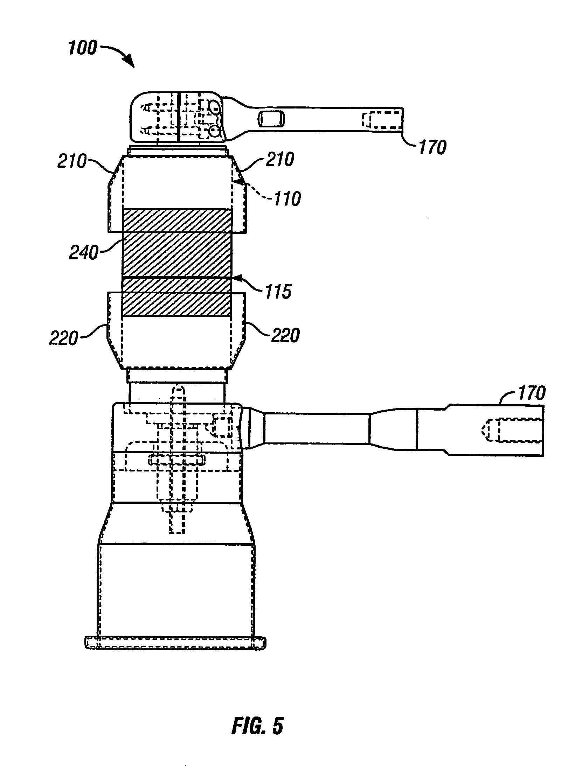

The two opposing voltage screens substantially enclose vacuum chamber 110, but leave a central portion exposed. As shown in FIG. 5, the central exposed portion of vacuum chamber 110 includes exposed ring 115 which supports floating shield 105. The exposed central portion of vacuum chamber 110 is coated with a semiconductive material 240 which may be the same or different from the semiconductive exterior layer 200. The semiconductive material 240 may be a fluid paint, bonding agent, epoxy, or the like that has an electrically conductive property. A preferred semiconductive material is Epic S7076 manufactured by Epic Resins of Palmyra Wisconsin. Epic S7076 is a carbon-filled, electrically conductive epoxy system that can be easily applied by hand or automatic dispensing equipment.

Semiconductive material 240 preferably extends into the areas encompassed by fixed voltage screen 210 and movable voltage screen 220. In this way, each voltage screen overlaps a portion of the applied semiconductive material 240. One knowledgeable in the art will understand that the semiconductive material 240 on the vacuum chamber exterior will assume the same potential as the floating shield 105 inside the vacuum interrupter 110 since they are linked by exposed ring 115. Therefore, when the contacts are separated, the semiconductive material 240 eliminates the voltage stress on the ends of the floating shield 105. Voltage screens electrically coupled to the fixed contact 120 and movable contact 130 drive the potential on the semiconductive coating 240 to 50% of the difference between the conductive end caps of the vacuum chamber 110 thereby achieving a balanced voltage potential distribution.

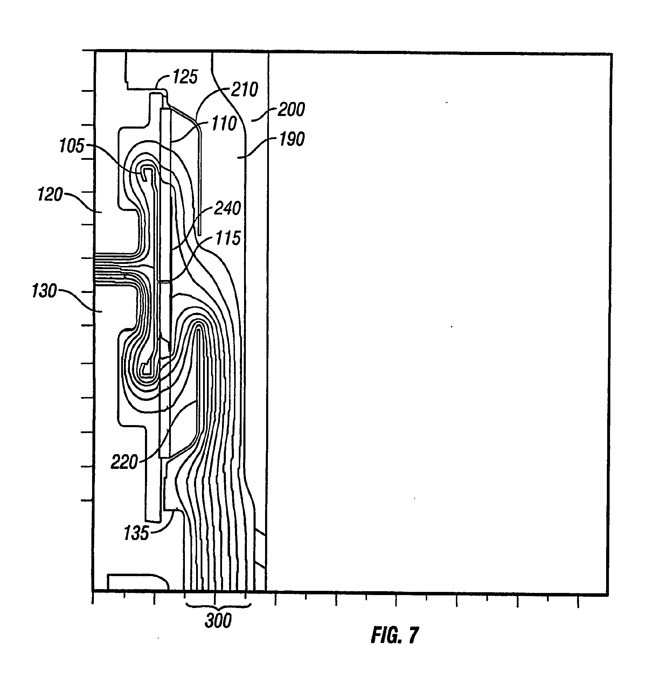

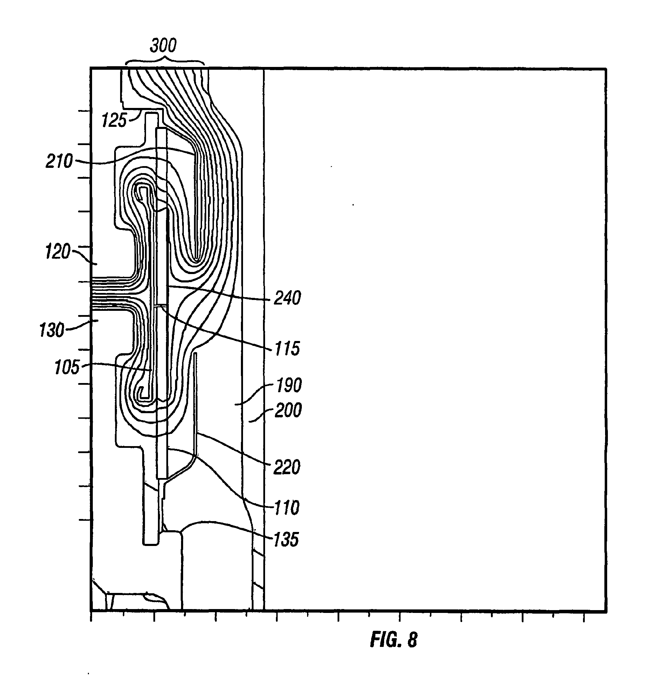

Referring now to FIG. 7, a finite element analysis for a vacuum interrupter with fixed voltage screen 210, movable voltage screen 220, and semiconductive material 240 applied to the vacuum chamber 110 shows that electric field lines 300 are nearly symmetrically distributed inside the vacuum chamber in the open gap. FIG. 8 shows the identical vacuum interrupter of FIG. 7, but with voltage polarity reversed. As shown, the electric field lines 300 remain symmetrically distributed in the open gap.

## Claims

1. A vacuum interrupter (100), comprising:
a dielectric encapsulation (190);
a vacuum chamber (110) disposed within the dielectric encapsulation, including:
a floating shield (105) disposed within the vacuum chamber; and
an exposed ring (115) electrically coupled with the floating shield and integral with the vacuum chamber;
a semi-conductive material (240) disposed on an exterior of the vacuum chamber;
**characterised in that** the semi-conductive material (100) is coupled with the exposed ring (115); and
a voltage screen (210) is coupled to and disposed outside the vacuum chamber (110), and forms a capacitive path with the semi-conductive material (240).

2. The vacuum interrupter of claim 1, wherein the voltage screen (210) is embedded in the dielectric encapsulation (190).

3. The vacuum interrupter of claim 1 or claim 2, wherein the vacuum chamber (110) includes an end cap (125), and the voltage screen (210) is coupled to the end cap (125).

4. The vacuum interrupter of any preceding claim, further comprising a second voltage screen (220) coupled to and disposed outside the vacuum chamber (110) so as to form a second capacitive path with the semi-conductive material (240).

5. The vacuum interrupter of claim 4, wherein the vacuum chamber (110) includes a second end cap (135), and the second voltage screen (220) is coupled to the second end cap (135).

6. The vacuum interrupter of claim 1, wherein:
the dielectric encapsulation (190) is of one-piece molded material and is configured to substantially encapsulate the vacuum interrupter;
the vacuum chamber (110) is molded into the dielectric encapsulation (190), the vacuum chamber comprising:
a ceramic housing;
a first end cap (125) sealing the housing;
a second end cap (135) sealing the housing;
the floating shield (105) within the housing; and
the exposed ring (115) coupled with the housing and coupled with the floating shield (105);
the semi-conductive material (240) is in contact with the exposed ring and disposed on a central exterior portion of the vacuum chamber ceramic housing such that bands at end portions of the vacuum chamber ceramic housing are substantially free of the semi-conductive material (240);
the voltage screen (210) is connected to the first end cap (125) and disposed outside the housing, and overlaps a first portion of the semi-conductive material, and forms a first capacitive path with the semi-conductive material (240); and
a second voltage screen (220) is connected to the second end cap (135) and disposed about the housing.

7. The vacuum interrupter of any preceding claim, wherein the dielectric encapsulation (190) is epoxy.

8. The vacuum interrupter of any preceding claim, wherein at least one of the voltage screens (210, 220) comprises a perforated metal sheet.

9. The vacuum interrupter of any of claims 1 to 7, wherein at least one of the voltage screens (210, 220) comprises a metallic mesh material.

10. The vacuum interrupter of any preceding claim, wherein at least one of the voltage screens (210, 220) is generally bowl-shaped.

11. The vacuum interrupter of Claim 1 wherein the voltage screens (210, 220) substantially enclose the vacuum chamber (110).

12. The vacuum interrupter of any of claims 4 to 11, wherein the voltage screens are mirror images of each other.

13. A method for mitigating electric field distortion inside a shielded encapsulated vacuum interrupter as claimed in claim 1, the method comprising:
providing a vacuum chamber (110) comprising:
a first conductive end cap (125);
a second conductive end cap (135);
a floating shield (105) within the chamber; and
an exposed ring (115) coupled with the floating shield (105) and integral with and disposed on the exterior of the vacuum chamber (110);
disposing a first semi-conductive material (240) on an exterior central portion of the vacuum chamber and contacting the exposed ring (115) such that bands at exterior end portions of the vacuum chamber are substantially free of the semi-conductive material (240);
connecting a first voltage screen (210) to the first conductive end cap (125);
disposing the first voltage screen (210) exterior to the chamber so as to form a capacitive path with the semi-conductive material (240);
connecting a second voltage screen (220) to the second conductive end cap (135);
disposing the second voltage screen (220) exterior to the chamber so as to form a second capacitive path with the semi-conductive material (240);
encapsulating the vacuum chamber (110) and voltage screens (210, 220) in molded dielectric material (190); and
disposing a second semi-conductive material (200) on the exterior of the molded dielectric material (190).

14. The method of claim 13 wherein the first and second voltage screens (210, 220) are comprised of perforated metal sheet or metallic mesh material.

15. The method of claim 13 or claim 14, wherein the first and second voltage screens (210, 220) are generally bowl-shaped.

16. The method of any of claims 13 to 15, wherein the first and second voltage screens (210, 220) substantially enclose the vacuum chamber (110) and the first semi-conductive material (240).

17. The method of any of claims 13 to 16, wherein the first and second voltage screens (210, 220) are mirror images of each other.

18. The method of any of claims 13 to 17, wherein the first semi-conductive material (240) and the second semi-conductive material (200) are the same.

19. The method of any of claims 13 to 18, wherein the molded dielectric material (190) is epoxy.

## Patentansprüche

1. Vakuumunterbrecher (100),
- mit einer dielektrischen Verkapselung (190);
- mit einer innerhalb der dielektrischen Verkapselung angeordneten Vakuumkammer (110) mit folgenden Merkmalen:
eine in der Vakuumkammer angeordnete hin und her bewegliche Abschirmung (105);
ein exponierter Ring (115), der elektrisch mit der hin und her beweglichen Abschirmung verbunden und mit der Vakuumkammer einstückig ist;
ein auf der Außenseite der Vakuumkammer angebrachtes Halbleitermaterial (240),
**dadurch gekennzeichnet,**
- **dass** das Halbleitermaterial (240) mit dem exponierten Ring (115) verbunden; und
- eine Spannungsabschirmung (210) außerhalb der Vakuumkammer (110) angeordnet und mit dieser verbunden ist und einen kapazitiven Pfad mit dem Halbleitermaterial (240) bildet.

2. Vakuumunterbrecher nach Anspruch 1, bei dem die Spannungsabschirmung (210) in der dielektrischen Verkapselung (190) eingebettet ist.

3. Vakuumunterbrecher nach Anspruch 1 oder 2, bei dem die Vakuumkammer (110) eine Endkappe (125) aufweist und die Spannungsabschirmung (210) mit der Endkappe (125) verbunden ist.

4. Vakuumunterbrecher nach einem der vorangehenden Ansprüche, mit einer zweiten Spannungsabschirmung (220), die außerhalb der Vakuumkammer (110) angeordnet und mit dieser verbunden ist, so dass sie einen zweiten kapazitiven Pfad mit dem Halbleitermaterial (240) bildet.

5. Vakuumunterbrecher nach Anspruch 4, bei dem die Vakuumkammer (110) eine zweite Endkappe (135) umfasst und die zweite Spannungsabschirmung (220) mit der zweiten Endkappe (135) verbunden ist.

6. Vakuumunterbrecher nach Anspruch 1, bei dem
- die dielektrische Verkapselung (190) aus einem einstückig geformten Material besteht und so ausgebildet ist, dass sie den Vakuumunterbrecher im Wesentlichen verkapselt;
- die Vakuumkammer (110) in die dielektrische Verkapselung (190) eingeformt ist, die die folgenden Merkmale umfasst:
ein keramisches Gehäuse;
eine erste das Gehäuse abdichtende Endkappe (125);
eine zweite das Gehäuse abdichtenden Endkappe (135);
die in dem Gehäuse hin und her bewegliche Abschirmung (105); und
den exponierten Ring (115) der mit dem Gehäuse und mit der hin und her beweglichen Abschirmung (105) verbunden ist;
- das Halbleitermaterial (240) in Kontakt mit dem exponierten Ring und auf einem mittleren äußeren Teil des keramischen Gehäuses der Vakuumkammer angeordnet ist, so dass bandförmige Bereiche an den Endteilen des keramischen Gehäuses der Vakuumkammer im Wesentlichen frei von Halbleitermaterial (240) sind;
- die Abschirmung (210) mit der ersten Endkappe (125) verbunden und außerhalb des Gehäuses angeordnet ist und den ersten Teil des Halbleitermaterials überlappt und einen ersten kapazitiven Pfad mit dem Halbleitermaterial (240) bildet; und
- die zweite Abschirmung (220) mit der zweiten Endkappe (135) verbunden und um das Gehäuse herum angeordnet ist.

7. Vakuumunterbrecher nach einem der vorangehenden Ansprüche, bei dem die dielektrische Verkapselung (190) aus Epoxyharz besteht.

8. Vakuumunterbrecher nach einem der vorangehenden Ansprüche, bei dem mindestens eine der Spannungsabschirmungen (210, 220) ein perforiertes Metallblech umfasst.

9. Vakuumunterbrecher nach einem der Ansprüche 1 bis 7, bei dem mindestens eine der Spannungsabschirmungen (210, 220) ein metallisches Gewebematerial umfasst.

10. Vakuumunterbrecher nach einem der vorangehenden Ansprüche, bei dem mindestens eine der Spannungsabschirmungen (210, 220) im Wesentlichen topfförmig ist.

11. Vakuumunterbrecher nach Anspruch 1, bei dem die Spannungsabschirmungen (210, 220) die Vakuumkammer (110) im Wesentlichen umschließen.

12. Vakuumunterbrecher nach einem der Ansprüche 4 bis 11, bei dem die Spannungsabschirmungen zu einander spiegelbildlich ausgebildet sind.

13. Verfahren zur Verringerung der elektrischen Feldverzerrung innerhalb eines abgeschirmten verkapselten Vakuumunterbrechers nach Anspruch 1, mit folgenden Verfahrensschritten:
- Bereitstellung einer Vakuumkammer (110) mit folgenden Merkmalen:
eine erste leitende Endkappe (125);
eine zweite leitfähige Endkappe (135);
eine in der Kammer hin und her bewegliche Abschirmung (105); und
einen exponierten Ring (115), der mit der hin und her beweglichen Abschirmung (105) verbunden und auf der Außenseite der Vakuumkammer (110) angeordnet und mit dieser verbunden ist;
- Anordnung eines ersten Halbleitermaterials (240) auf einem äußeren mittleren Teil der Vakuumkammer und Kontaktierung des exponierten Rings (115) derart, dass bandförmige Bereiche auf den äußeren Endteilen der Vakuumkammer im Wesentlichen frei von Halbleitermaterial (240) bleiben;
- Verbinden der ersten Spannungsabschirmung (210) mit der ersten leitenden Endkappe (125);
- Anordnung der ersten Spannungsabschirmung (210) auf der Außenseite der Kammer unter Bildung eines kapazitiven Pfades mit dem Halbleitermaterial (240);
- Verbinden einer zweiten Spannungsabschirmung mit einer zweiten leitenden Endkappe (135);
- Anordnen der zweiten Spannungsabschirmung (220) auf der Außenseite der Kammer, so dass ein zweiter kapazitiver Pfad mit dem Halbleitermaterial (240) gebildet ist;
- Verkapselung der Vakuumkammer (110) und der Spannungsabschirmung (210, 220) in geformtem dielektrischen Material (190); und
- Anordnung eines zweiten Halbleitermaterials (200) auf der Außenseite des geformten dielektrischen Materials (190).

14. Verfahren nach Anspruch 13, bei dem die ersten und zweiten Spannungsabschirmungen (210, 220) perforiertes Metallblech oder metallisches Gewebematerial umfassen.

15. Verfahren nach Anspruch 13 oder 14, bei dem die ersten und zweiten Spannungsabschirmungen (210, 220) im Wesentlichen topfförmig ausgebildet sind.

16. Verfahren nach einem der Ansprüche 13 bis 15, bei dem die ersten und zweiten Spannungsabschirmungen (210, 220) die Vakuumkammer (110) und das erste Halbleitermaterial (240) im Wesentlichen umschließen.

17. Verfahren nach einem der Ansprüche 13 bis 16, bei dem die ersten und zweiten Spannungsabschirmungen (210, 220) zu einander spiegelbildlich ausgebildet sind.

18. Verfahren nach einem der Ansprüche 13 bis 17, bei dem das erste Halbleitermaterial (240) und das zweite Halbleitermaterial (200) dasselbe sind.

19. Verfahren nach einem der Ansprüche 13 bis 18, bei dem das geformte dielektrische Material (190) Epoxyharz ist.

## Revendications

1. Interrupteur à vide (100), comprenant :
une encapsulation diélectrique (190) ;
une chambre à vide (110) disposée à l'intérieur de l'encapsulation diélectrique, incluant :
un blindage flottant (105) disposé à l'intérieur de la chambre à vide ; et
une bague exposée (115) couplée électriquement au blindage flottant et
solidaire avec la chambre à vide ;
un matériau semi-conducteur (240) disposé sur un extérieur de la chambre à vide ;
**caractérisé en ce que**
le matériau semi-conducteur (100) est couplé à la bague exposée (115) ; et
qu'un écran de tension (210) est couplé à, et disposé à l'extérieur de, la chambre à vide (110), et forme un chemin capacitif avec le matériau semi-conducteur (240).

2. Interrupteur à vide selon la revendication 1, dans lequel l'écran de tension (210) est incorporé dans l'encapsulation diélectrique (190).

3. Interrupteur à vide selon la revendication 1 ou la revendication 2, dans lequel la chambre à vide (110) inclut un capuchon d'extrémité (125) et l'écran de tension (210) est couplé au capuchon d'extrémité (125).

4. Interrupteur à vide selon l'une quelconque des revendications précédentes, comprenant en outre un deuxième écran de tension (220) couplé à, et disposé à l'extérieur de, la chambre à vide (110), de manière à former un deuxième chemin capacitif avec le matériau semi-conducteur (240).

5. Interrupteur à vide selon la revendication 4, dans lequel la chambre à vide (110) inclut un deuxième capuchon d'extrémité (135) et le deuxième écran de tension (220) est couplé au deuxième capuchon d'extrémité (135).

6. Interrupteur à vide selon la revendication 1, dans lequel :
l'encapsulation diélectrique (190) est de matière moulée d'un seul tenant et est configurée de manière à encapsuler sensiblement l'interrupteur à vide ;
la chambre à vide (110) est moulée dans l'encapsulation (190), la chambre à vide comprenant :
un logement céramique ;
un premier capuchon d'extrémité (125) scellant le logement :
un deuxième capuchon d'extrémité (135) scellant le logement ;
l'écran flottant (105) à l'intérieur du logement ; et
la bague exposée (115) couplée au logement et couplé à l'écran flottant (105) ;
le matériau semi-conducteur (240) est en contact avec la bague exposée et disposé sur une portion extérieure centrale du logement céramique de chambre à vide de telle manière que des bandes au niveau des portions d'extrémité du logement céramique de chambre à vide sont sensiblement libres du matériau semi-conducteur (240) ;
l'écran de tension (210) est connecté au premier capuchon d'extrémité (125) et disposé à l'extérieur du logement, et recouvre une première portion du matériau semi-conducteur, et forme un premier chemin capacitif avec le matériau semi-conducteur (240) ; et
un deuxième écran de tension (220) est connecté au deuxième capuchon d'extrémité (135) et disposé autour du logement.

7. Interrupteur à vide selon l'une quelconque des revendications précédentes, dans lequel l'encapsulation diélectrique (190) est une résine époxyde.

8. Interrupteur à vide selon l'une quelconque des revendications précédentes, dans lequel au moins l'un des écrans de tension (210, 220) comprend une feuille métallique perforée.

9. Interrupteur à vide selon l'une quelconque des revendications 1 à 7, dans lequel au moins l'un des écrans de tension (210, 220) comprend un matériau en maille métallique.

10. Interrupteur à vide selon l'une quelconque des revendications précédentes, dans lequel au moins l'un des écrans de tension (210, 220) est généralement en forme de bol.

11. Interrupteur à vide selon la revendication 1, dans lequel les écrans de tension (210, 220) enferment sensiblement la chambre à vide (110).

12. Interrupteur à vide selon l'une quelconque des revendications 4 à 11, dans lequel les écrans de tension sont des images inversées l'une de l'autre.

13. Procédé destiné à limiter une distorsion de champ électrique à l'intérieur d'un interrupteur à vide encapsulé blindé selon la revendication 1, le procédé comprenant les étapes consistant à :
- fournir un chambre à vide (110) comprenant :
un premier capuchon d'extrémité conducteur (125) ;
un deuxième capuchon d'extrémité conducteur (135) ;
un écran flottant (105) à l'intérieur de la chambre ; et
une bague exposée (115) couplée à l'écran flottant (105) et solidaire avec, et disposée sur, l'extérieur de la chambre à vide (110) ;
- disposer un premier matériau semi-conducteur (240) sur une portion centrale extérieure de la chambre à vide et le mettre en contact avec la bague exposée (115) de telle manière que des bandes au niveau des portions d'extrémité extérieures de la chambre à vide sont sensiblement libres du matériau semi-conducteur (240) ;
- connecter un premier écran de tension (210) au premier capuchon d'extrémité conducteur (125) ;
- disposer le premier écran de tension (210) à l'extérieur de la chambre, de manière à former un chemin capacitif avec le matériau semi-conducteur (240) ;
- connecter un deuxième écran de tension (220) au deuxième capuchon d'extrémité conducteur (135) ;
- disposer le deuxième écran de tension (220) à l'extérieur de la chambre, de manière à former un deuxième chemin capacitif avec le matériau semi-conducteur (240) ;
- encapsuler la chambre à vide (110) et les écrans de tension (210, 22à) dans une matière diélectrique moulée (190) ; et
- disposer un deuxième matériau semi-conducteur (200) sur l'extérieur de la matière diélectrique (190) moulée.

14. Procédé selon la revendication 13, dans lequel le premier et le deuxième écrans de tension (210, 220) sont composés de feuille métallique ou de matériau en maille métallique.

15. Procédé selon la revendication 13 ou la revendication 14, dans lequel le premier et le deuxième écrans de tension (210, 220) sont généralement en forme de bol.

16. Procédé selon l'une quelconque des revendications 13 à 15, dans lequel le premier et le deuxième écrans de tension (210, 220) enferment sensiblement la chambre à vide (110) et le premier matériau semi-conducteur (240).

17. Procédé selon l'une quelconque des revendications 13 à 16, dans lequel le premier et le deuxième écrans de tension (210, 220) sont des images inversées l'une de l'autre.

18. Procédé selon l'une quelconque des revendications 13 à 17, dans lequel le premier matériau semi-conducteur (240) et le deuxième matériau semi-conducteur (200) sont les mêmes.

19. Procédé selon l'une quelconque des revendications 13 à 18, dans lequel la matériau diélectrique moulé (190) est une résine époxyde.
